# DEMANDE DE BREVET EUROPEEN

(11) **EP 4 850 579 A1**
(43) Date de publication de la demande: **09.12.2026**
(21) Numéro de dépôt: 26181217.6
(22) Date de dépôt: 27.05.2026
(51) Int. Cl.: A47J 37/06

(54) **APPAREIL DE CUISSON A AIR CHAUD AVEC FAÇADE AMOVIBLE**

(30) Priorité: 02.06.2025 FR 2505904
(71) Demandeur: SEB S.A., 69130 Ecully (FR)
(72) Inventeur: JAPIOT, Frédéric, 69134 ECULLY CEDEX (FR); BONY, Kévin, 69134 ECULLY CEDEX (FR)
(74) Mandataire: SEB Développement

(57) **Abrégé**

L'invention concerne un appareil de cuisson électrique comprenant un boîtier, un récipient de cuisson (4) comportant une cuve de cuisson (5) et une façade avant (7) reliée de manière amovible à une partie avant (8) de la cuve de cuisson (5). La façade avant (7) est configurée pour occuper une configuration d'utilisation dans laquelle la façade avant (7) est solidaire avec la cuve de cuisson (5), et une configuration de nettoyage dans laquelle la façade avant (7) est dissociée de la cuve de cuisson (5). L'appareil de cuisson électrique comporte en outre un système de génération d'air chaud configuré pour générer un flux d'air chaud dans le compartiment de cuisson. Le récipient de cuisson (4) comprend un premier dispositif de fixation amovible disposé à proximité d'une première extrémité latérale (14.1) de la façade avant (7), et un deuxième dispositif de fixation amovible disposé à proximité d'une deuxième extrémité latérale de la façade avant (7).

## Description

### Domaine technique

La présente invention concerne de manière générale un appareil de cuisson électrique pour cuire des aliments selon au moins un mode de cuisson à air chaud.

### Etat de la technique

Il est connu de l'art antérieur d'utiliser un appareil de cuisson électrique configuré pour la cuisson d'aliments, et comprenant :
- un boîtier comprenant un compartiment de cuisson,
- un récipient de cuisson comportant :
   ∘ une cuve de cuisson configurée pour occuper une position d'insertion dans laquelle la cuve de cuisson est au moins en partie insérée à l'intérieur du compartiment de cuisson, et une position de retrait dans laquelle la cuve de cuisson est au moins en partie retirée hors du compartiment de cuisson, et
   ∘ une façade avant reliée de manière amovible à une partie avant de la cuve de cuisson, la façade avant étant configurée pour occuper une configuration d'utilisation dans laquelle la façade avant est solidaire avec la cuve de cuisson, et une configuration de nettoyage dans laquelle la façade avant est dissociée de la cuve de cuisson,
- un système de génération d'air chaud configuré pour générer un flux d'air chaud et comportant :
   ∘ un élément chauffant disposé en regard du compartiment de cuisson, et
   ∘ deux ventilateurs disposés respectivement en regard du compartiment de cuisson et agencés pour générer un flux d'air en direction de l'élément chauffant.

Ce type d'appareil de cuisson électrique est performant car il permet à un utilisateur de cuire des aliments disposés dans la cuve de cuisson notamment selon un mode de cuisson à air chaud. En outre, la présence de la façade avant amovible permet un nettoyage aisé et optimal du récipient de cuisson après utilisation. Cependant, lors de l'utilisation d'une cuve de cuisson dont la taille est importante, la manipulation et le démontage de la façade avant peut s'avérer complexe par l'utilisateur.

### Résumé de l'invention

Le problème technique à la base de l'invention consiste donc à fournir un appareil de cuisson électrique qui soit de structure simple, compacte et économique, tout en permettant une manipulation aisée et sécurisée d'un récipient de cuisson, appartenant à l'appareil de cuisson électrique, par l'utilisateur et tout en permettant un nettoyage aisé du récipient de cuisson.

A cet effet, la présente invention concerne un appareil de cuisson électrique configuré pour la cuisson d'aliments, et comprenant :
- un boîtier comprenant un compartiment de cuisson,
- un récipient de cuisson comportant :
   ∘ une cuve de cuisson configurée pour occuper une position d'insertion dans laquelle la cuve de cuisson est au moins en partie insérée à l'intérieur du compartiment de cuisson, et une position de retrait dans laquelle la cuve de cuisson est au moins en partie retirée hors du compartiment de cuisson, et
   ∘ une façade avant reliée de manière amovible à une partie avant de la cuve de cuisson, la façade avant étant configurée pour occuper une configuration d'utilisation dans laquelle la façade avant est solidaire avec la cuve de cuisson, et une configuration de nettoyage dans laquelle la façade avant est dissociée de la cuve de cuisson,
- un système de génération d'air chaud configuré pour générer un flux d'air chaud et comportant :
   ∘ au moins un élément chauffant disposé en regard du compartiment de cuisson, et
   ∘ au moins deux ventilateurs disposés respectivement en regard du compartiment de cuisson et agencés pour générer un flux d'air en direction, et par exemple au contact, de l'au moins un élément chauffant,
le récipient de cuisson comprenant un premier dispositif de fixation amovible disposé à proximité d'une première extrémité latérale de la façade avant, et par exemple d'une première extrémité latérale d'une partie frontale de la façade avant, et un deuxième dispositif de fixation amovible disposé à proximité d'une deuxième extrémité latérale de la façade avant, et par exemple d'une deuxième extrémité latérale de la partie frontale de la façade avant, lorsque la façade avant est dans la configuration d'utilisation.

Une telle configuration du récipient de cuisson permet une manipulation et un retrait aisés de la façade avant par rapport à la cuve de cuisson au moyen du premier dispositif de fixation amovible et du deuxième dispositif de fixation amovible prévus de part et d'autre de la façade avant. En outre, la multiplicité des dispositifs de fixation entre la façade avant et la cuve de cuisson permet un maintien optimal et sécurisé de la façade avant sur la cuve de cuisson dans la configuration d'utilisation, permettant d'éviter une désolidarisation intempestive de la façade avant lorsqu'une grande quantité d'aliment est présente dans la cuve de cuisson par exemple.

L'appareil de cuisson électrique peut en outre présenter une ou plusieurs des caractéristiques suivantes, qui peuvent être prises seules ou en combinaison.

Selon un mode de réalisation de l'invention, le premier dispositif de fixation amovible est distinct du deuxième dispositif de fixation amovible. En d'autres termes, le premier dispositif de fixation amovible est dissocié mécaniquement du deuxième dispositif de fixation amovible.

Selon un mode de réalisation de l'invention, la cuve de cuisson est configurée pour être entièrement retirée hors du compartiment de cuisson dans la position de retrait.

Selon un mode de réalisation de l'invention, la cuve de cuisson est configurée pour recevoir des aliments.

Selon un mode de réalisation de l'invention, le système de génération d'air chaud est prévu dans une partie supérieure du boîtier.

Selon un mode de réalisation de l'invention, chacun des ventilateurs est disposé au moins en partie en regard de l'au moins un élément chauffant.

Selon un mode de réalisation de l'invention, la cuve de cuisson et le boîtier sont configurés pour délimiter au moins en partie une chambre de cuisson lorsque la cuve de cuisson est dans la position d'insertion.

Selon un mode de réalisation de l'invention, le récipient de cuisson est amovible par rapport au boîtier.

Selon un mode de réalisation de l'invention, le récipient de cuisson comporte au moins une poignée de préhension prévue sur la façade avant.

Selon un mode de réalisation de l'invention, la largeur du récipient de cuisson représente au moins 80% de la largeur du boîtier.

Selon un mode de réalisation de l'invention, le premier dispositif de fixation amovible comporte un premier organe de retenue, tel qu'un premier logement de retenue, prévu sur la cuve de cuisson et un premier organe de verrouillage prévu sur la façade avant, et le deuxième dispositif de fixation amovible comporte un deuxième organe de retenue, tel qu'un deuxième logement de retenue, prévu sur la cuve de cuisson et un deuxième organe de verrouillage prévu sur la façade avant, le premier organe de verrouillage et le deuxième organe de verrouillage étant mobiles entre une configuration de verrouillage dans laquelle le premier organe de verrouillage et le deuxième organe de verrouillage sont configurés pour coopérer respectivement avec le premier organe de retenue et le deuxième organe de retenue de manière à maintenir la façade avant dans la configuration d'utilisation, et une configuration de libération dans laquelle le premier organe de verrouillage et le deuxième organe de verrouillage sont configurés pour libérer respectivement le premier organe de retenue et le deuxième organe de retenue de manière à autoriser un déplacement de la façade avant dans la configuration de nettoyage.

Selon un mode de réalisation de l'invention, le premier organe de retenue et le deuxième organe de retenue sont prévus dans une partie avant de la cuve de cuisson, et par exemple dans une partie inférieure de la partie avant de la cuve de cuisson.

Selon un mode de réalisation de l'invention, le premier organe de verrouillage et le deuxième organe de verrouillage sont prévus dans la partie frontale de la façade avant, et par exemple dans une partie inférieure de la partie frontale de la façade avant.

Selon un mode de réalisation de l'invention, le premier organe de verrouillage est monté pivotant autour d'un premier axe de pivotement, et le deuxième organe de verrouillage est monté pivotant autour d'un deuxième axe de pivotement.

Selon un mode de réalisation de l'invention, le premier organe de verrouillage comporte un premier doigt de verrouillage apte à coopérer avec le premier organe de retenue, et le deuxième organe de verrouillage comporte un deuxième doigt de verrouillage apte à coopérer avec le deuxième organe de retenue.

Selon un mode de réalisation de l'invention, le premier axe de pivotement et le deuxième axe de pivotement sont configurés pour s'étendre sensiblement horizontalement lorsque le récipient de cuisson repose sur une surface horizontale et que la façade avant est dans la configuration d'utilisation.

Selon un mode de réalisation de l'invention, l'appareil de cuisson électrique comporte un premier organe d'actionnement et un deuxième organe d'actionnement aptes à être actionnés par un utilisateur lorsque la façade avant est dans la configuration d'utilisation, le premier organe d'actionnement étant configuré pour déplacer le premier organe de verrouillage de la configuration de verrouillage à la configuration de libération lorsque le premier organe d'actionnement est actionné par l'utilisateur, le deuxième organe d'actionnement étant configuré pour déplacer le deuxième organe de verrouillage de la configuration de verrouillage à la configuration de libération lorsque le deuxième organe d'actionnement est actionné par l'utilisateur.

Selon un mode de réalisation de l'invention, le premier dispositif de fixation amovible et le premier organe d'actionnement sont configurés de telle sorte qu'un déplacement du premier organe d'actionnement de la configuration de repos à la configuration enfoncée entraîne un déplacement du premier organe de verrouillage de la configuration de verrouillage à la configuration de libération, et de telle sorte qu'un déplacement du premier organe d'actionnement de la configuration enfoncée à la configuration de repos entraîne un déplacement du premier organe de verrouillage de la configuration de libération à la configuration de verrouillage.

Selon un mode de réalisation de l'invention, le deuxième dispositif de fixation amovible et le deuxième organe d'actionnement sont configurés de telle sorte qu'un déplacement du deuxième organe d'actionnement de la configuration de repos à la configuration enfoncée entraîne un déplacement du deuxième organe de verrouillage de la configuration de verrouillage à la configuration de libération, et de telle sorte qu'un déplacement du deuxième organe d'actionnement de la configuration enfoncée à la configuration de repos entraîne un déplacement du deuxième organe de verrouillage de la configuration de libération à la configuration de verrouillage.

Selon un mode de réalisation de l'invention, le premier organe d'actionnement et le deuxième organe d'actionnement sont prévus sur la façade avant.

Selon un mode de réalisation de l'invention, le premier organe d'actionnement est monté mobile en translation, par exemple par rapport à la façade avant, selon une première direction de translation et entre une configuration enfoncée dans laquelle le premier organe de verrouillage occupe la configuration de libération, et une configuration de repos dans laquelle le premier organe de verrouillage occupe la configuration de verrouillage, et le deuxième organe d'actionnement est monté mobile en translation, par exemple par rapport à la façade avant, selon une deuxième direction de translation et entre une configuration enfoncée dans laquelle le deuxième organe de verrouillage occupe la configuration de libération, et une configuration de repos dans laquelle le deuxième organe de verrouillage occupe la configuration de verrouillage.

Selon un mode de réalisation de l'invention, le premier organe d'actionnement et le deuxième organe d'actionnement sont prévus respectivement sur une première partie latérale et une deuxième partie latérale de la façade avant.

Selon un mode de réalisation de l'invention, le premier organe d'actionnement et le deuxième organe d'actionnement sont configurés pour être affleurant avec une surface externe de la façade avant lorsqu'ils occupent la configuration de repos.

Selon un mode de réalisation de l'invention, la première direction de translation et la deuxième direction de translation sont configurées pour s'étendre sensiblement horizontalement lorsque le récipient de cuisson repose sur une surface horizontale et que la façade avant est dans la configuration d'utilisation.

Selon un mode de réalisation de l'invention, le premier organe d'actionnement comporte une première partie d'appui pourvue d'une première surface d'appui contre laquelle un utilisateur est apte à pourvoir exercer une pression et le deuxième organe d'actionnement comporte une deuxième partie d'appui pourvue d'une deuxième surface d'appui contre laquelle un utilisateur est apte à pourvoir exercer une pression, la première surface d'appui et la deuxième surface d'appui étant configurées pour s'étendre en regard du boîtier lorsque la cuve de cuisson est dans la position d'insertion et que la façade avant est dans la configuration d'utilisation.

Selon un mode de réalisation de l'invention, la première surface d'appui et la deuxième surface d'appui s'étendent selon un même plan d'appui qui est sensiblement transversal à la première direction de translation et à la deuxième direction de translation.

Selon un mode de réalisation de l'invention, le plan d'appui est sensiblement vertical lorsque le récipient de cuisson repose sur une surface horizontale et que la façade avant est dans la configuration d'utilisation.

Selon un mode de réalisation de l'invention, chacun du premier organe d'actionnement et du deuxième organe d'actionnement est configuré pour être accessible par un utilisateur lorsque la façade avant est dans la configuration d'utilisation et que le récipient de cuisson est dans la position de retrait.

Selon un mode de réalisation de l'invention, le premier dispositif de fixation amovible comprend un premier élément de liaison relié mécaniquement au premier organe de verrouillage d'une part et au premier organe d'actionnement d'autre part, et le deuxième dispositif de fixation amovible comprend un deuxième élément de liaison relié mécaniquement au deuxième organe de verrouillage d'une part et au deuxième organe d'actionnement d'autre part.

Selon un mode de réalisation de l'invention, le premier élément de liaison et le deuxième élément de liaison sont configurés pour transformer le mouvement de translation du premier organe d'actionnement et du deuxième organe d'actionnement en un mouvement de pivotement du premier organe de verrouillage et du deuxième organe de verrouillage.

Selon un mode de réalisation de l'invention, le premier élément de liaison est solidaire en mouvement du premier organe de verrouillage. De façon avantageuse, le premier élément de liaison et le premier organe de verrouillage sont réalisés en une seule pièce.

Selon un mode de réalisation de l'invention, le deuxième élément de liaison est solidaire en mouvement du deuxième organe de verrouillage. De façon avantageuse, le deuxième élément de liaison et le deuxième organe de verrouillage sont réalisés en une seule pièce.

Selon un mode de réalisation de l'invention, le premier organe d'actionnement comporte une première partie d'actionnement, telle qu'une patte d'actionnement, reliée mécaniquement au premier élément de liaison, et le deuxième organe d'actionnement comporte une deuxième partie d'actionnement, telle qu'une patte d'actionnement, reliée mécaniquement au deuxième élément de liaison.

Selon un mode de réalisation de l'invention, la première partie d'actionnement comporte une fente de guidage (qui peut par exemple être configurée pour s'étendre sensiblement verticalement) dans laquelle est monté coulissant un ergot de guidage prévu sur le premier élément de liaison, et la deuxième partie d'actionnement comporte une fente de guidage (qui peut par exemple être configurée pour s'étendre sensiblement verticalement) dans laquelle est monté coulissant un ergot de guidage prévu sur le deuxième élément de liaison.

Selon un mode de réalisation de l'invention, l'appareil de cuisson électrique comporte un premier organe de rappel configuré pour rappeler le premier organe de verrouillage dans la configuration de verrouillage, et un deuxième organe de rappel configuré pour rappeler le deuxième organe de verrouillage dans la configuration de verrouillage.

Selon un mode de réalisation de l'invention, le premier organe de rappel est configuré pour solliciter le premier organe de commande dans la configuration de repos et le deuxième organe de rappel est configuré pour solliciter le deuxième organe de commande dans la configuration de repos.

Selon un mode de réalisation de l'invention, l'appareil de cuisson électrique comporte au moins un dispositif de fixation amovible additionnel prévu entre le premier dispositif de fixation amovible et le deuxième dispositif de fixation amovible lorsque la façade avant est dans la configuration d'utilisation.

Selon un mode de réalisation de l'invention, l'appareil de cuisson électrique comprend un élément chauffant additionnel disposé en regard du compartiment de cuisson, et par exemple en regard de la cuve de cuisson lorsque la cuve de cuisson occupe la position d'insertion.

Selon un mode de réalisation de l'invention, lequel la façade avant comporte deux poignées de préhension latérales. Les deux poignées de préhension latérales sont plus particulièrement disposées respectivement sur la première partie latérale et la deuxième partie latérale de la façade avant.

Selon un mode de réalisation de l'invention, les deux poignées de préhension latérales sont formées au moins en partie par deux évidements latéraux, chacun des évidements latéraux comprenant une surface de fond qui est située en retrait par rapport à une surface externe de la façade avant.

Selon un mode de réalisation de l'invention, la façade avant est monobloc, c'est-à-dire qu'elle est réalisée en une seule pièce.

Selon un autre mode de réalisation de l'invention, les deux poignées de préhension latérales sont fixées de manière amovible à la façade avant.

Selon un mode de réalisation de l'invention, le récipient de cuisson comporte une première paroi transparente montée sur la cuve de cuisson et configurée pour obturer au moins en partie un premier orifice traversant prévu sur la cuve de cuisson, et une deuxième paroi transparente montée sur la façade avant et configurée pour obturer au moins en partie un deuxième orifice traversant prévue sur la façade avant, la première paroi transparente s'étendant au moins en partie en regard de la deuxième paroi transparente lorsque la façade avant est dans la configuration d'utilisation.

Selon un mode de réalisation de l'invention, la cuve de cuisson comprend un premier élément de maintien et un deuxième élément de maintien prévus sur une portion supérieure de la cuve de cuisson et respectivement configurés pour coopérer avec un premier élément de maintien complémentaire et un deuxième élément de maintien complémentaire prévus sur la façade avant lorsque la façade avant est dans la configuration d'utilisation.

Selon un mode de réalisation de l'invention, le premier élément de maintien et le deuxième élément de maintien sont configurés pour empêcher un basculement vers l'avant et vers le bas d'une partie supérieure de la façade avant lorsque la façade est dans la configuration d'utilisation.

Selon un mode de réalisation de l'invention, le premier élément de maintien forme un premier organe d'accrochage configuré pour accrocher le premier élément de maintien complémentaire, et le deuxième élément de maintien forme un deuxième organe d'accrochage configuré pour accrocher le deuxième élément de maintien complémentaire.

Selon un mode de réalisation de l'invention, le premier élément de maintien complémentaire forme un premier logement de maintien qui est ouvert vers le haut et qui est apte à loger au moins en partie le premier élément de maintien, et le deuxième élément de maintien complémentaire forme un deuxième logement de maintien qui est ouvert vers le haut et qui est apte à loger au moins en partie le deuxième élément de maintien.

Selon un mode de réalisation de l'invention, le récipient de cuisson, la façade avant et le premier dispositif de fixation amovible et deuxième dispositif de fixation amovible sont configurés de telle sorte qu'un mouvement de déplacement de la façade avant de la configuration d'utilisation à la configuration de nettoyage comporte :
- une première phase de déplacement au cours de laquelle la façade avant est pivotée autour d'un axe de pivotement de façade de manière à éloigner une partie inférieure de la façade de la cuve de cuisson ; et
- une deuxième phase de déplacement au cours de laquelle la façade avant est déplacée vers le bas.

Selon un mode de réalisation de l'invention, l'axe de pivotement de façade est sensiblement horizontal lorsque le récipient de cuisson repose sur une surface horizontale et que la façade avant occupe la position d'utilisation.

Selon un mode de réalisation de l'invention, au cours de la première phase de déplacement, la façade avant est pivotée autour de l'axe de pivotement de façade de manière à éloigner le premier organe de verrouillage du premier organe de retenue et à éloigner le deuxième organe de verrouillage du deuxième organe de retenue.

Selon un mode de réalisation de l'invention, au cours de la deuxième phase de déplacement, la façade avant est déplacée vers le bas de manière à éloigner le premier élément de maintien complémentaire du premier élément de maintien et à éloigner le deuxième élément de maintien complémentaire du deuxième de maintien.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en perspective avant d'un appareil de cuisson comprenant un récipient de cuisson et selon un mode de réalisation de l'invention ;
[Fig 2] est une vue en perspective du récipient de cuisson de la figure 1, montrant une cuve de cuisson et une façade avant appartenant au récipient de cuisson et en cours de démontage ;
[Fig 3] est une vue en perspective du récipient de cuisson de la figure 1, dans laquelle la façade avant est dans une configuration de nettoyage ;
[Fig 4A] est une vue en perspective d'un premier organe de verrouillage prévu sur la façade avant ;
[Fig 4B] est une vue en perspective d'un deuxième organe de verrouillage prévu sur la façade avant ;
[Fig 5] est une vue de face du premier organe de verrouillage de la figure 4A ;
[Fig 6] est une vue en perspective, tronquée selon un premier plan de coupe vertical, du récipient de cuisson de la figure 1 et représentant en partie un premier dispositif de fixation amovible ;
[Fig 7] est une vue en perspective avant de la cuve de cuisson appartenant au récipient de cuisson de la figure 1 ;
[Fig 8] est une vue en perspective arrière de la façade avant appartenant au récipient de cuisson de la figure 1.

### Description détaillée

Dans le présent document, les termes « avant », « arrière », « supérieur », « inférieur » et « haut » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

Dans le présent document, le terme « disposé à proximité » signifie situé à une distance inférieure à 5 cm, et avantageusement inférieure à 3 cm.

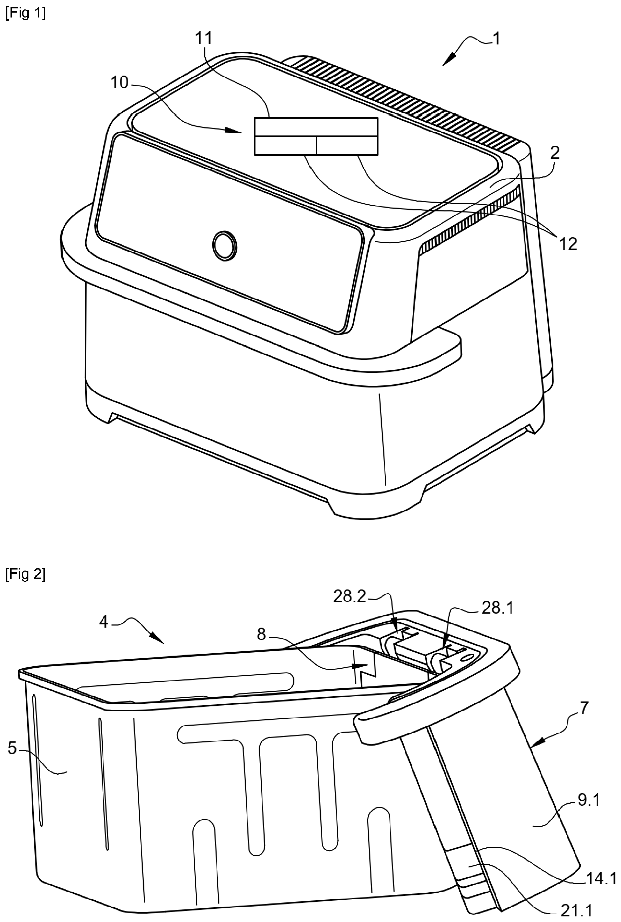

Les figures 1 à 8 représentent tout ou partie d'un appareil de cuisson électrique conformé pour cuire des aliments et selon un mode de réalisation de l'invention. L'appareil de cuisson électrique 1 comprend notamment un boîtier 2 comprenant un compartiment de cuisson, et un récipient de cuisson 4 qui est amovible par rapport au boîtier 2.

De façon avantageuse, le récipient de cuisson 4 comporte une cuve de cuisson 5 configurée pour recevoir des aliments à cuire et configurée pour occuper une position d'insertion dans laquelle la cuve de cuisson 5 est insérée à l'intérieur du compartiment de cuisson, et une position de retrait dans laquelle la cuve de cuisson 5 est en partie ou entièrement retirée hors du compartiment de cuisson. La cuve de cuisson 5 et le boîtier 2 sont configurés pour délimiter au moins en partie une chambre de cuisson lorsque la cuve de cuisson 5 est dans la position d'insertion.

Selon le mode de réalisation représenté sur les figures, le récipient de cuisson 4 comporte en outre une première paroi transparente 6.1 montée sur la cuve de cuisson 5 et configurée pour obturer un premier orifice traversant prévu sur la cuve de cuisson 5.

Le récipient de cuisson 4 comporte en outre une façade avant 7 reliée de manière amovible à une partie avant 8 de la cuve de cuisson 5. La façade avant 7 est configurée pour occuper une configuration d'utilisation dans laquelle la façade avant 7 est solidaire avec la cuve de cuisson 5, et une configuration de nettoyage dans laquelle la façade avant 7 est dissociée de la cuve de cuisson 5. En outre, la largeur du récipient de cuisson 4 représente au moins 80% de la largeur du boîtier 2.

Selon le mode de réalisation représenté sur les figures, le récipient de cuisson 4 comporte également une deuxième paroi transparente 6.2 montée sur la façade avant 7 et configurée pour obturer au moins en partie un deuxième orifice traversant prévue sur la façade avant 7. Plus particulièrement, la première paroi transparente 6.1 s'étend en partie en regard de la deuxième paroi transparente 6.2 lorsque la façade avant 7 est dans la configuration d'utilisation.

Selon le mode de réalisation représenté sur les figures, l'appareil de cuisson électrique 1 comporte un système de génération d'air chaud 10, prévu dans une partie supérieure du boîtier 2, et configuré pour générer un flux d'air chaud destiné à chauffer les aliments présents dans la cuve de cuisson 5. Le système de génération d'air chaud 10 comporte un élément chauffant 11 disposé en regard du compartiment de cuisson, et deux ventilateurs 12 disposés respectivement en regard du compartiment de cuisson et agencés pour générer un flux d'air en direction, et par exemple au contact, de l'élément chauffant 11, chacun des ventilateurs 12 étant disposé au moins en partie en regard de l'élément chauffant 11. Selon une variante de réalisation, l'appareil de cuisson électrique 1 peut comprendre un élément chauffant additionnel disposé en regard du compartiment de cuisson, et par exemple en regard de la cuve de cuisson 5 lorsque la cuve de cuisson 5 occupe la position d'insertion, une telle configuration permet notamment d'améliorer la capacité de chauffe du système de génération d'air chaud 10.

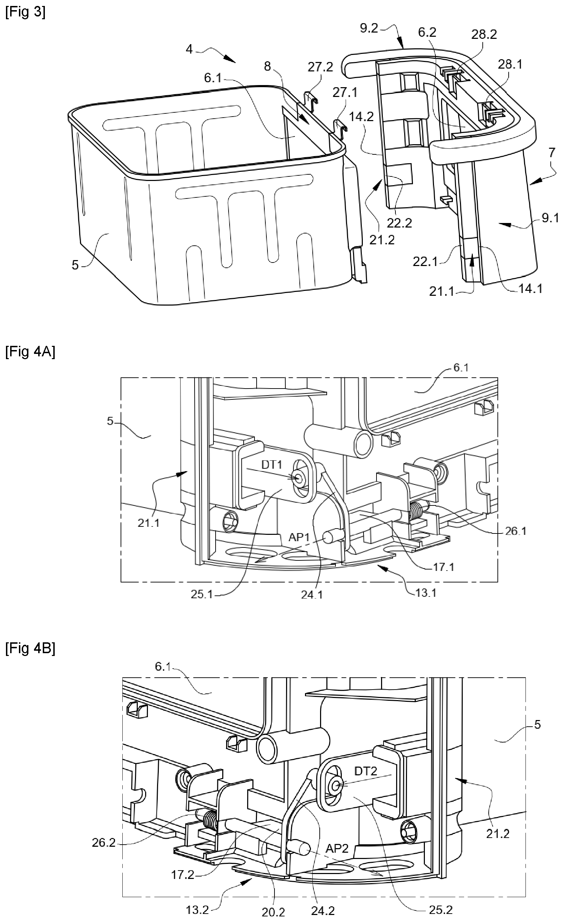

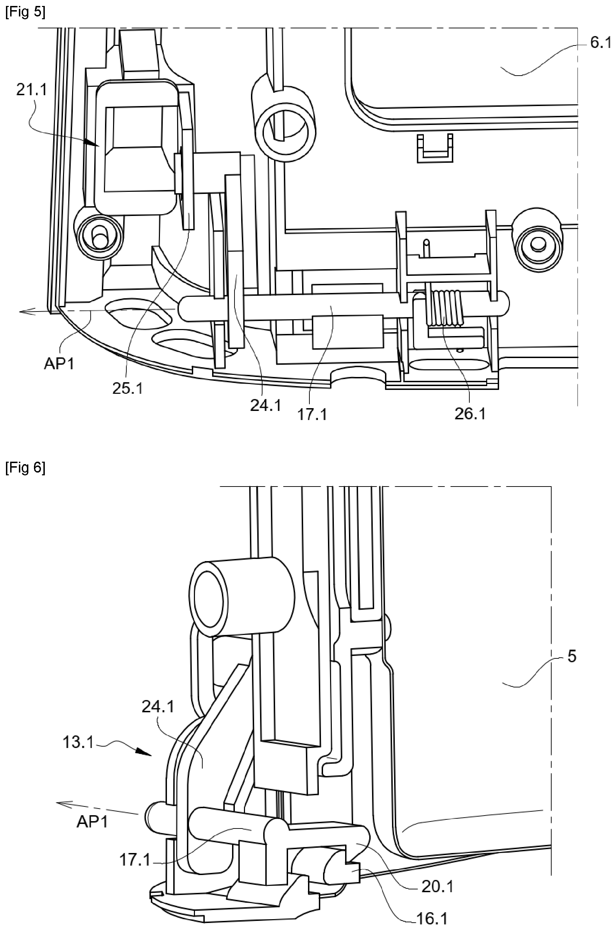

Plus particulièrement, le récipient de cuisson 4 comprend un premier dispositif de fixation amovible 13.1 (voir figures 4A et 6) disposé à proximité d'une première extrémité latérale 14.1 de la façade avant 7, et par exemple d'une première extrémité latérale d'une partie frontale de la façade avant 7, lorsque la façade avant 7 est dans la configuration d'utilisation. Le récipient de cuisson 4 comprend en outre un deuxième dispositif de fixation amovible 13.2 (figure 4B) disposé à proximité d'une deuxième extrémité latérale 14.2 de la façade avant 7, et par exemple d'une deuxième extrémité latérale de la partie frontale de la façade avant 7, lorsque la façade avant 7 est dans la configuration d'utilisation. Une telle configuration du récipient de cuisson 4 permet une manipulation et un retrait aisés de la façade avant 7 par rapport à la cuve de cuisson 5 au moyen du premier dispositif de fixation amovible 13.1 et du deuxième dispositif de fixation amovible 13.2 prévus de part et d'autre de la façade avant 7. La multiplicité des dispositifs de fixation entre la façade avant 7 et la cuve de cuisson 5 permet un maintien optimal et sécurisé de la façade avant 7 sur la cuve de cuisson 5 dans la configuration d'utilisation, permettant d'éviter une désolidarisation intempestive de la façade avant 7 lorsque des aliments sont présents dans la cuve de cuisson 5 par exemple. De façon avantageuse, le premier dispositif de fixation amovible 13.1 est distinct du deuxième dispositif de fixation amovible 13.2, de telle sorte que le premier dispositif de fixation amovible 13.1 est dissocié mécaniquement du deuxième dispositif de fixation amovible 13.2.

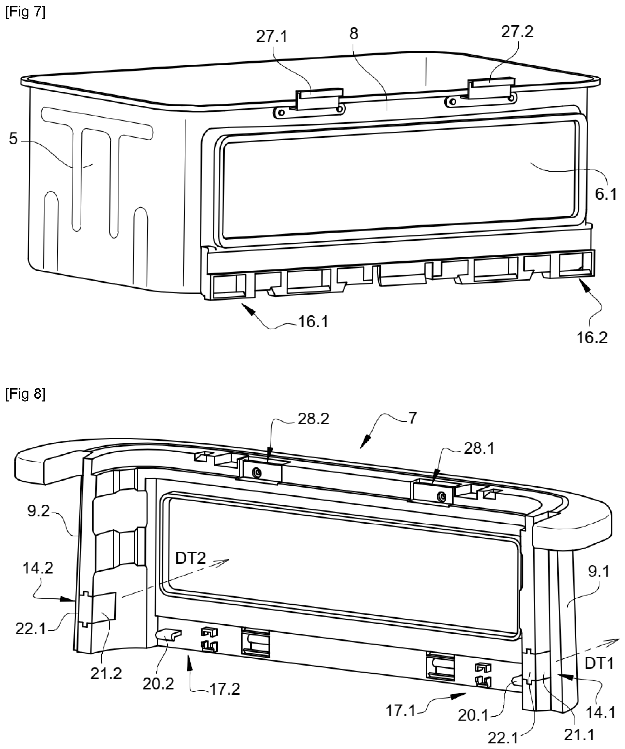

Le premier dispositif de fixation amovible 13.1 comporte un premier organe de retenue 16.1 (figures 6 et 7), tel qu'un premier logement de retenue, prévu dans une partie inférieure de la partie avant 8 de la cuve de cuisson 5, et un premier organe de verrouillage 17.1 prévu sur la façade avant 7 (voir figures 4A, 5, 6 et 8). De façon similaire, le deuxième dispositif de fixation amovible 13.2 comporte un deuxième organe de retenue 16.2, tel qu'un deuxième logement de retenue, prévu dans la partie inférieure de la partie avant 8 de la cuve de cuisson 5, et un deuxième organe de verrouillage 17.2 prévu sur la façade avant 7 (voir figures 4B, 5, 6 et 8). Le premier organe de verrouillage 17.1 et le deuxième organe de verrouillage 17.2 sont mobiles entre une configuration de verrouillage dans laquelle le premier organe de verrouillage 17.1 et le deuxième organe de verrouillage 17.2 sont configurés pour coopérer respectivement avec le premier organe de retenue 16.1 et le deuxième organe de retenue 16.2 de manière à maintenir la façade avant 7 dans la configuration d'utilisation, et une configuration de libération dans laquelle le premier organe de verrouillage 17.1 et le deuxième organe de verrouillage 17.2 sont configurés pour libérer respectivement le premier organe de retenue 16.1 et le deuxième organe de retenue 16.2 de manière à autoriser un déplacement de la façade avant 7 dans la configuration de nettoyage.

Selon le mode de réalisation représenté sur les figures, le premier organe de verrouillage 17.1 et le deuxième organe de verrouillage 17.2 sont prévus dans la partie frontale de la façade avant 7, et par exemple dans une partie inférieure de la partie frontale de la façade avant 7. Le premier organe de verrouillage 17.1 est plus particulièrement monté pivotant autour d'un premier axe de pivotement AP1, et le deuxième organe de verrouillage 17.2 est plus particulièrement monté pivotant autour d'un deuxième axe de pivotement AP2, le premier axe de pivotement AP1 et le deuxième axe de pivotement AP2 étant configurés pour s'étendre sensiblement horizontalement lorsque le récipient de cuisson 4 repose sur une surface horizontale et que la façade avant 7 est dans la configuration d'utilisation.

Comme représenté plus spécifiquement sur la figure 6, le premier organe de verrouillage 17.1 comporte un premier doigt de verrouillage 20.1 apte à coopérer avec le premier organe de retenue 16.1, et le deuxième organe de verrouillage 17.2 comporte un deuxième doigt de verrouillage 20.2 apte à coopérer avec le deuxième organe de retenue 16.2.

Afin de permettre la libération de la façade avant 7, l'appareil de cuisson électrique 1 comporte un premier organe d'actionnement 21.1 et un deuxième organe d'actionnement 21.2 prévus sur la façade avant 7 et aptes à être actionnés par l'utilisateur lorsque la façade avant 7 est dans la configuration d'utilisation. Le premier organe d'actionnement 21.1 est monté mobile en translation par rapport à la façade avant 7 selon une première direction de translation DT1 et entre une configuration enfoncée dans laquelle le premier organe de verrouillage 17.1 occupe la configuration de libération, et une configuration de repos dans laquelle le premier organe de verrouillage 17.1 occupe la configuration de verrouillage. De façon analogue, le deuxième organe d'actionnement 21.2 est monté mobile en translation par rapport à la façade avant 7, selon une deuxième direction de translation DT2 et entre une configuration enfoncée dans laquelle le deuxième organe de verrouillage 17.2 occupe la configuration de libération, et une configuration de repos dans laquelle le deuxième organe de verrouillage 17.2 occupe la configuration de verrouillage. Selon le mode de réalisation représenté sur les figures, la première direction de translation DT1 et la deuxième direction de translation DT2 sont configurées pour s'étendre sensiblement horizontalement lorsque le récipient de cuisson 4 repose sur une surface horizontale et que la façade avant 7 est dans la configuration d'utilisation.

Comme représenté sur les figures 3, 4A, 4B et 8, le premier organe d'actionnement 21.1 et le deuxième organe d'actionnement 21.2 sont prévus respectivement sur une première partie latérale 9.1 et une deuxième partie latérale 9.2 de la façade avant 7 et sont configurés pour être affleurant avec une surface externe de la façade avant 7 lorsqu'ils occupent la configuration de repos.

Selon le mode de réalisation représenté sur les figures, le premier organe d'actionnement 21.1 comporte une première partie d'appui 22.1 pourvue d'une première surface d'appui contre laquelle l'utilisateur est apte à pourvoir exercer une pression, et le deuxième organe d'actionnement 21.2 comporte une deuxième partie d'appui 22.2 pourvue d'une deuxième surface d'appui contre laquelle l'utilisateur est apte à pourvoir exercer une pression. La première surface d'appui et la deuxième surface d'appui sont avantageusement configurées pour s'étendre en regard du boîtier 2 lorsque la cuve de cuisson 5 est dans la position d'insertion et que la façade avant 7 est dans la configuration d'utilisation. En outre, la première surface d'appui et la deuxième surface d'appui s'étendent selon un même plan d'appui qui est transversal à la première direction de translation DT1 et à la deuxième direction de translation DT2 ; le plan d'appui est sensiblement vertical lorsque le récipient de cuisson 4 repose sur une surface horizontale et que la façade avant 7 est dans la configuration d'utilisation. Aussi, chacun du premier organe d'actionnement 21.1 et du deuxième organe d'actionnement 21.2 est configuré pour être accessible par l'utilisateur lorsque la façade avant 7 est dans la configuration d'utilisation et que le récipient de cuisson 4 est dans la position de retrait.

Le premier organe d'actionnement 21.1 est avantageusement configuré pour déplacer le premier organe de verrouillage 17.1 de la configuration de verrouillage à la configuration de libération lorsque le premier organe d'actionnement 21.1 est actionné par l'utilisateur, et le deuxième organe d'actionnement 21.2 est configuré pour déplacer le deuxième organe de verrouillage 17.2 de la configuration de verrouillage à la configuration de libération lorsque le deuxième organe d'actionnement 21.2 est actionné par l'utilisateur.

Plus particulièrement, le premier dispositif de fixation amovible 13.1 et le premier organe d'actionnement 21.1 sont configurés de telle sorte qu'un déplacement du premier organe d'actionnement 21.1 de la configuration de repos à la configuration enfoncée entraîne un déplacement du premier organe de verrouillage 17.1 de la configuration de verrouillage à la configuration de libération, et de telle sorte qu'un déplacement du premier organe d'actionnement 21.1 de la configuration enfoncée à la configuration de repos entraîne un déplacement du premier organe de verrouillage 17.1 de la configuration de libération à la configuration de verrouillage.

De façon analogue, le deuxième dispositif de fixation amovible 13.2 et le deuxième organe d'actionnement 21.2 sont configurés de telle sorte qu'un déplacement du deuxième organe d'actionnement 21.2 de la configuration de repos à la configuration enfoncée entraîne un déplacement du deuxième organe de verrouillage 17.2 de la configuration de verrouillage à la configuration de libération, et de telle sorte qu'un déplacement du deuxième organe d'actionnement 21.2 de la configuration enfoncée à la configuration de repos entraîne un déplacement du deuxième organe de verrouillage 17.2 de la configuration de libération à la configuration de verrouillage.

Selon le mode de réalisation représenté sur les figures, le premier dispositif de fixation amovible 13.1 comprend en outre un premier élément de liaison 24.1 (voir figures 4A à 6) solidaire avec le premier organe de verrouillage 17.1 d'une part et relié mécaniquement au premier organe d'actionnement 21.1 d'autre part, et le deuxième dispositif de fixation amovible 13.2 comprend un deuxième élément de liaison 24.2 solidaire avec le deuxième organe de verrouillage 17.2 d'une part et relié mécaniquement au deuxième organe d'actionnement 21.2 d'autre part. Le premier élément de liaison 24.1 et le deuxième élément de liaison 24.2 sont configurés pour transformer le mouvement de translation du premier organe d'actionnement 21.1 et du deuxième organe d'actionnement 21.2 en un mouvement de pivotement du premier organe de verrouillage 17.1 et du deuxième organe de verrouillage 17.2. De façon avantageuse, le premier élément de liaison 24.1 et le premier organe de verrouillage 17.1 sont réalisés en une seule pièce, et le deuxième élément de liaison 24.2 et le deuxième organe de verrouillage 17.2 sont réalisés en une seule pièce.

Selon le mode de réalisation représenté sur les figures, et comme représenté sur la figure 4A et la figure 4B, le premier organe d'actionnement 21.1 comporte une première partie d'actionnement 25.1, telle qu'une patte d'actionnement, reliée mécaniquement au premier élément de liaison 24.1, et le deuxième organe d'actionnement 21.2 comporte une deuxième partie d'actionnement 25.2, telle qu'une patte d'actionnement, reliée mécaniquement au deuxième élément de liaison 24.2.

Plus précisément, et comme représenté sur les figures 4A et 4B, la première partie d'actionnement 25.1 comporte une fente de guidage (qui peut par exemple être configurée pour s'étendre sensiblement verticalement) dans laquelle est monté coulissant un ergot de guidage prévu sur le premier élément de liaison 24.1, et la deuxième partie d'actionnement 25.2 comporte une fente de guidage (qui peut par exemple être configurée pour s'étendre sensiblement verticalement) dans laquelle est monté coulissant un ergot de guidage prévu sur le deuxième élément de liaison 24.2.

Avantageusement, l'appareil de cuisson électrique 1 comporte un premier organe de rappel 26.1 configuré pour rappeler le premier organe de verrouillage 17.1 dans la configuration de verrouillage, et un deuxième organe de rappel 26.2 configuré pour rappeler le deuxième organe de verrouillage 17.2 dans la configuration de verrouillage. Le premier organe de rappel 26.1 est également configuré pour solliciter le premier organe de commande dans la configuration de repos, et le deuxième organe de rappel 26.2 est également configuré pour solliciter le deuxième organe de commande dans la configuration de repos.

Comme représenté sur les figures 3, 7 et 8, la cuve de cuisson 5 comprend un premier élément de maintien 27.1 et un deuxième élément de maintien 27.2 prévus sur une portion supérieure de la cuve de cuisson 5 et respectivement configurés pour coopérer avec un premier élément de maintien complémentaire 28.1 et un deuxième élément de maintien complémentaire 28.2 prévus sur la façade avant 7, lorsque la façade avant 7 est dans la configuration d'utilisation. Le premier élément de maintien 27.1 et le deuxième élément de maintien 27.2 sont avantageusement configurés pour empêcher un basculement vers l'avant et vers le bas d'une partie supérieure de la façade avant 7 lorsque la façade est dans la configuration d'utilisation.

De façon avantageuse, le premier élément de maintien 27.1 forme un premier organe d'accrochage configuré pour accrocher le premier élément de maintien complémentaire 28.1, et le deuxième élément de maintien 27.2 forme un deuxième organe d'accrochage configuré pour accrocher le deuxième élément de maintien complémentaire 28.2.

Selon le mode de réalisation représenté sur les figures, le premier élément de maintien complémentaire 28.1 forme un premier logement de maintien qui est ouvert vers le haut et qui est apte à loger au moins en partie le premier élément de maintien 27.1, et le deuxième élément de maintien complémentaire 28.2 forme un deuxième logement de maintien qui est ouvert vers le haut et qui est apte à loger au moins en partie le deuxième élément de maintien 27.2.

Selon le mode de réalisation représenté sur les figures, le récipient de cuisson 4, la façade avant 7 et le premier dispositif de fixation amovible 13.1 et deuxième dispositif de fixation amovible 13.2 sont configurés de telle sorte qu'un mouvement de déplacement de la façade avant 7 de la configuration d'utilisation à la configuration de nettoyage comporte :
- une première phase de déplacement au cours de laquelle la façade avant 7 est pivotée par un utilisateur autour d'un axe de pivotement de façade sensiblement horizontal (lorsque le récipient de cuisson 4 repose sur une surface horizontale et que la façade avant 7 occupe la position d'utilisation) de manière à éloigner une partie inférieure de la façade avant 7 par rapport à la cuve de cuisson 5, et plus particulièrement de manière à éloigner le premier organe de verrouillage 17.1 du premier organe de retenue 16.1 et à éloigner le deuxième organe de verrouillage 17.2 du deuxième organe de retenue 16.2 ;
- une deuxième phase de déplacement au cours de laquelle la façade avant 7 est déplacée vers le bas de manière à éloigner le premier élément de maintien complémentaire 28.1 du premier élément de maintien 27.1 et à éloigner le deuxième élément de maintien complémentaire 28.2 du deuxième de maintien 28.1.

Selon un autre mode de réalisation de l'invention non représenté sur les figures, l'appareil de cuisson électrique 1 pourrait, de façon optionnelle, comporter un dispositif de fixation amovible additionnel prévu entre le premier dispositif de fixation amovible 13.1 et le deuxième dispositif de fixation amovible 13.2 lorsque la façade avant 7 est dans la configuration d'utilisation.

Selon un autre mode de réalisation de l'invention non représenté sur les figures, la façade avant 7 peut être monobloc, c'est-à-dire qu'elle est réalisée en une seule pièce, et peut comporter au moins une, et par exemple deux poignées de préhension latérales. Les deux poignées de préhension latérales sont plus particulièrement disposées respectivement sur la première partie latérale 9.1 et la deuxième partie latérale 9.2 de la façade avant 7. Les deux poignées de préhension latérales peuvent par exemple être formées en partie par deux évidements latéraux, chacun des évidements latéraux comprenant une surface de fond qui est située en retrait par rapport à une surface externe de la façade avant 7. Alternativement, les poignées de préhension latérales peuvent être fixées de manière amovible à la façade avant 7 afin de faciliter la préhension par un utilisateur.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) comprenant :
- un boîtier (2) comprenant un compartiment de cuisson ;
- un récipient de cuisson (4) comportant :
∘ une cuve de cuisson (5) configurée pour occuper une position d'insertion dans laquelle la cuve de cuisson (5) est au moins en partie insérée à l'intérieur du compartiment de cuisson, et une position de retrait dans laquelle la cuve de cuisson (5) est au moins en partie retirée hors du compartiment de cuisson, et
∘ une façade avant (7) reliée de manière amovible à une partie avant (8) de la cuve de cuisson (5), la façade avant (7) étant configurée pour occuper une configuration d'utilisation dans laquelle la façade avant (7) est solidaire avec la cuve de cuisson (5), et une configuration de nettoyage dans laquelle la façade avant (7) est dissociée de la cuve de cuisson (5),
- un système de génération d'air chaud (10) configuré pour générer un flux d'air chaud et comportant :
∘ au moins un élément chauffant (11) disposé en regard du compartiment de cuisson, et
∘ au moins deux ventilateurs (12) disposés respectivement en regard du compartiment de cuisson et agencés pour générer un flux d'air en direction de l'au moins un élément chauffant (11) ;
**caractérisé en ce que** le récipient de cuisson (4) comprend un premier dispositif de fixation amovible (13.1) disposé à proximité d'une première extrémité latérale (14.1) de la façade avant (7) et un deuxième dispositif de fixation amovible (13.2) disposé à proximité d'une deuxième extrémité latérale (14.2) de la façade avant (7) lorsque la façade avant (7) est dans la configuration d'utilisation.

2. Appareil de cuisson électrique (1) selon la revendication 1, dans lequel le premier dispositif de fixation amovible (13.1) comporte un premier organe de retenue (16.1) prévu sur la cuve de cuisson (5) et un premier organe de verrouillage (17.1) prévu sur la façade avant (7), et le deuxième dispositif de fixation amovible (13.2) comporte un deuxième organe de retenue (16.2) prévu sur la cuve de cuisson (5) et un deuxième organe de verrouillage (17.2) prévu sur la façade avant (7),
le premier organe de verrouillage (17.1) et le deuxième organe de verrouillage (17.2) étant mobiles entre une configuration de verrouillage dans laquelle le premier organe de verrouillage (17.1) et le deuxième organe de verrouillage (17.2) sont configurés pour coopérer respectivement avec le premier organe de retenue (16.1) et le deuxième organe de retenue (16.2) de manière à maintenir la façade avant (7) dans la configuration d'utilisation, et une configuration de libération dans laquelle le premier organe de verrouillage (17.1) et le deuxième organe de verrouillage (17.2) sont configurés pour libérer respectivement le premier organe de retenue (16.1) et le deuxième organe de retenue (16.2) de manière à autoriser un déplacement de la façade avant (7) dans la configuration de nettoyage.

3. Appareil de cuisson électrique (1) selon la revendication précédente, lequel comporte un premier organe d'actionnement (21.1) et un deuxième organe d'actionnement (21.2) aptes à être actionnés par un utilisateur lorsque la façade avant (7) est dans la configuration d'utilisation, le premier organe d'actionnement (21.1) étant configuré pour déplacer le premier organe de verrouillage (17.1) de la configuration de verrouillage à la configuration de libération lorsque le premier organe d'actionnement (21.1) est actionné par l'utilisateur, le deuxième organe d'actionnement (21.2) étant configuré pour déplacer le deuxième organe de verrouillage (17.2) de la configuration de verrouillage à la configuration de libération lorsque le deuxième organe d'actionnement (21.2) est actionné par l'utilisateur.

4. Appareil de cuisson électrique (1) selon la revendication précédente, dans lequel le premier organe d'actionnement (21.1) est monté mobile en translation selon une première direction de translation (DT1) et entre une configuration enfoncée dans laquelle le premier organe de verrouillage (17.1) occupe la configuration de libération, et une configuration de repos dans laquelle le premier organe de verrouillage (17.1) occupe la configuration de verrouillage, et le deuxième organe d'actionnement (21.2) est monté mobile en translation selon une deuxième direction de translation (DT2) et entre une configuration enfoncée dans laquelle le deuxième organe de verrouillage (17.2) occupe la configuration de libération, et une configuration de repos dans laquelle le deuxième organe de verrouillage (17.2) occupe la configuration de verrouillage.

5. Appareil de cuisson électrique (1) selon la revendication 3 ou 4, dans le premier organe d'actionnement (21.1) et le deuxième organe d'actionnement (21.2) sont prévus respectivement sur une première partie latérale (9.1) et une deuxième partie latérale (9.2) de la façade avant (7).

6. Appareil de cuisson électrique (1) selon l'une quelconque des revendications 3 à 5, dans lequel le premier organe d'actionnement (21.1) comporte une première partie d'appui (22.1) pourvue d'une première surface d'appui contre laquelle un utilisateur est apte à pourvoir exercer une pression et le deuxième organe d'actionnement (21.2) comporte une deuxième partie d'appui (22.2) pourvue d'une deuxième surface d'appui contre laquelle un utilisateur est apte à pourvoir exercer une pression, la première surface d'appui et la deuxième surface d'appui étant configurées pour s'étendre en regard du boîtier (2) lorsque la cuve de cuisson (5) est dans la position d'insertion et que la façade avant (7) est dans la configuration d'utilisation.

7. Appareil de cuisson électrique (1) selon l'une quelconque des revendications 3 à 6, dans lequel le premier dispositif de fixation amovible (13.1) comprend un premier élément de liaison (24.1) relié mécaniquement au premier organe de verrouillage (17.1) d'une part et au premier organe d'actionnement (21.1) d'autre part, et dans lequel le deuxième dispositif de fixation amovible (13.2) comprend un deuxième élément de liaison (24.2) relié mécaniquement au deuxième organe de verrouillage (17.2) d'une part et au deuxième organe d'actionnement (21.2) d'autre part.

8. Appareil de cuisson électrique (1) selon l'une quelconque des revendications 2 à 7, lequel comporte un premier organe de rappel (26.1) configuré pour rappeler le premier organe de verrouillage (17.1) dans la configuration de verrouillage, et un deuxième organe de rappel (26.2) configuré pour rappeler le deuxième organe de verrouillage (17.2) dans la configuration de verrouillage.

9. Appareil de cuisson électrique (1) selon l'une quelconque des revendications 1 à 8, lequel comporte au moins un dispositif de fixation amovible additionnel prévu entre le premier dispositif de fixation amovible (13.1) et le deuxième dispositif de fixation amovible (13.2) lorsque la façade avant (7) est dans la configuration d'utilisation.

10. Appareil de cuisson électrique (1) selon l'une quelconque des revendications 1 à 9, lequel comprend un élément chauffant additionnel disposé en regard du compartiment de cuisson.

11. Appareil de cuisson électrique (1) selon l'une quelconque des revendications 1 à 10, dans lequel la façade avant (7) comporte deux poignées de préhension latérales.

12. Appareil de cuisson électrique (1) selon l'une quelconque des revendications 1 à 11, dans lequel la façade avant (7) est monobloc.

13. Appareil de cuisson électrique (1) selon l'une quelconque des revendication 1 à 12, dans lequel le récipient de cuisson (4) comporte une première paroi transparente (6.1) montée sur la cuve de cuisson (5) et configurée pour obturer au moins en partie un premier orifice traversant prévu sur la cuve de cuisson (5), et une deuxième paroi transparente (6.2) montée sur la façade avant (7) et configurée pour obturer au moins en partie un deuxième orifice traversant prévue sur la façade avant (7), la première paroi transparente (6.1) s'étendant au moins en partie en regard de la deuxième paroi transparente (6.2) lorsque la façade avant (7) est dans la configuration d'utilisation.

14. Appareil de cuisson électrique (1) selon l'une quelconque des revendications 1 à 13, dans lequel la cuve de cuisson (5) comprend un premier élément de maintien (27.1) et un deuxième élément de maintien (27.2) prévus sur une portion supérieure de la cuve de cuisson (5) et respectivement configurés pour coopérer avec un premier élément de maintien complémentaire (28.1) et un deuxième élément de maintien complémentaire (28.2) prévus sur la façade avant (7) lorsque la façade avant (7) est dans la configuration d'utilisation.

15. Appareil de cuisson électrique (1) selon l'une quelconque des revendications 1 à 14, dans lequel le récipient de cuisson (4), la façade avant (7) et le premier dispositif de fixation amovible (13.1) et deuxième dispositif de fixation amovible (13.2) sont configurés de telle sorte qu'un mouvement de déplacement de la façade avant (7) de la configuration d'utilisation à la configuration de nettoyage comporte :
- une première phase de déplacement au cours de laquelle la façade avant (7) est pivotée autour d'un axe de pivotement de façade de manière à éloigner une partie inférieure de la façade de la cuve de cuisson (5) ; et
- une deuxième phase de déplacement au cours de laquelle la façade avant (7) est déplacée vers le bas.
